# EUROPÄISCHE PATENTANMELDUNG

(11) **EP 3 170 597 A1**
(43) Veröffentlichungstag der Anmeldung: **24.05.2017**
(21) Anmeldenummer: 15194976.5
(22) Anmeldetag: 17.11.2015
(51) Int. Cl.: B23B 49/00, B25H 1/00, B25F 5/00

(54) **AUSRICHTHILFE FÜR EINE HANDWERKZEUGMASCHINE**

(71) Anmelder: HILTI Aktiengesellschaft, 9494 Schaan (LI)
(72) Erfinder: Schaer, Roland, 9472 Grabs (CH); Balter, Marco, 6800 Feldkirch (AT)
(74) Vertreter: Hilti Aktiengesellschaft Corporate Intellectual Property

(57) **Zusammenfassung**

Die erfindungsgemäße Ausrichthilfe **14** für eine Handwerkzeugmaschine **1** hat einen Speicher **21**, in welchem eine Soll-Orientierung der Handwerkzeugmaschine **1** gegenüber einer zu bearbeitenden Oberfläche **15** und eine Referenz-Orientierung einer Referenzfläche **12** der Handwerkzeugmaschine **1** gegenüber der Soll-Orientierung hinterlegt sind. Ein Eingabemittel **16, 23** zum Initialisieren der Ausrichthilfe **14** setzt ansprechend auf ein Betätigen eine aktuelle Orientierung mit der Referenz-Orientierung gleich. Ein Drehbewegungssensor **25** erfasst eine Drehbewegung der Ausrichthilfe **14**. Eine Auswerteinheit **24** ermittelt eine aktuelle Orientierung gegenüber der zu bearbeitenden Oberfläche **15** basierend auf den erfassten Drehbewegungen und ermittelt eine Abweichung der aktuellen Orientierung von der Soll-Orientierung. Eine Anzeige **17** zeigt dem Anwender eine Abweichung der aktuellen Orientierung von der Soll-Orientierung an.

## Beschreibung

### GEBIET DER ERFINDUNG

Die vorliegende Erfindung betrifft eine Ausrichthilfe für eine Handwerkzeugmaschine.

### OFFENBARUNG DER ERFINDUNG

Die erfindungsgemäße Ausrichthilfe für eine Handwerkzeugmaschine hat einen Speicher, in welchem eine Soll-Orientierung der Handwerkzeugmaschine gegenüber einer zu bearbeitenden Oberfläche und eine Referenz-Orientierung einer Referenzfläche der Handwerkzeugmaschine gegenüber der Soll-Orientierung hinterlegt sind. Ein Eingabemittel, zum Initialisieren der Ausrichthilfe setzt ansprechend auf ein Betätigen eine aktuelle Orientierung mit der Referenz-Orientierung gleich. Ein Drehbewegungssensor erfasst eine Drehbewegung der Ausrichthilfe. Eine Auswerteinheit ermittelt eine aktuelle Orientierung gegenüber der zu bearbeitenden Oberfläche basierend auf den erfassten Drehbewegungen und ermittelt eine Abweichung der aktuellen Orientierung von der Soll-Orientierung. Eine Anzeige zeigt dem Anwender eine Abweichung der aktuellen Orientierung von der Soll-Orientierung an.

Die Ausrichthilfe ermöglicht eine einfache zuverlässige Orientierung der Handwerkzeugmaschine gegenüber der zu bearbeitenden Oberfläche. Die Referenzfläche ist eine markante Fläche an der Handwerkzeugmaschine, deren Orientierung bezogen auf die Arbeitsachse per se bekannt ist. Der Anwender berührt die zu bearbeitenden Oberfläche mit der markanten Fläche, wodurch die Ausrichthilfe nun ihre Orientierung zu der Oberfläche kennt. Die Ausrichthilfe muss nun entsprechend der Orientierung der markanten Fläche gegenüber der Arbeitsachse geschwenkt werden, damit die Arbeitsachse die gewünschte Orientierung zu der zu bearbeitenden Oberfläche erhält.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Elektroschrauber
- Fig. 2: den Elektroschrauber in einer Rückansicht

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

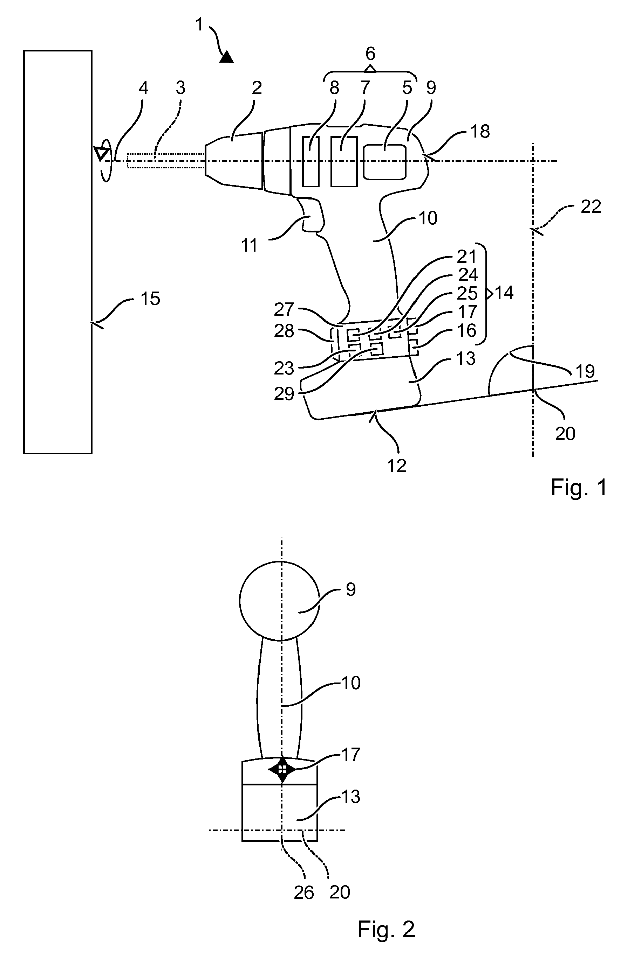

Fig. 1 zeigt als Beispiel für eine Handwerkzeugmaschine einen Elektroschrauber **1.** Der Elektroschrauber **1** hat einen Werkzeughalter **2,** in welchen ein Werkzeug **3,** wie ein Schrauberbit, ein Bohrer etc., eingesetzt und verriegelt werden kann. Der Werkzeughalter **2** ist um eine Arbeitsachse **4** drehbar und wird um die Arbeitsachse **4** durch einen Elektromotor **5** angetrieben. Ein Antriebsstrang **6** verbindet den Werkzeughalter **2** und den Elektromotor **5.** Der Antriebsstrang **6** kann ein untersetzendes Getriebe **7,** eine Rutschkupplung **8** und weitere Komponenten enthalten.

Der Elektromotor **5** und der Antriebsstrang **6** sind in einem Maschinengehäuse **9** angeordnet. Ein Handgriff **10** ist an dem Maschinengehäuse **9** befestigt. Der Anwender kann den Elektroschrauber **1** mittels des Handgriffs **10** während des Betriebs halten und führen. Ein Betriebstaster **11** ist nahe des Handgriffs **10** angeordnet. Der Anwender kann den Betriebstaster **11** vorzugsweise mit der den Handgriff **10** umschließenden Hand betätigen. Der Elektroschrauber **1** kann mittels des Betriebstasters **11** ein- und ausgeschaltet werden.

Der beispielhafte Elektroschrauber **1** kann auf einem ebenen Tisch abgestellt werden. Der Elektroschrauber **1** steht dabei ruhig auf seiner Stellfläche **12**. Die beispielhafte Stellfläche **12** ist eine ebene Unterseite der Batterie **13**. Der Elektroschrauber **1** hat dabei eine wohl definierte Orientierung gegenüber dem Tisch. Die Orientierung ist bis auf einer Rotation um eine Vertikale zu dem Tisch bekannt. Die Stellfläche **12** ist so ausgeprägt, dass der Elektroschrauber **1** nicht kippelt oder in einer anderen Weise sinnvoll auf den Tisch gestellt werden kann. Dem Anwender ist eine notwendige Ausrichtung des Elektroschraubers **1** zum Hinstellen auf dem Tisch derart natürlich, dass eine andere fehlerhafte Ausrichtung unwahrscheinlich ist. Insbesondere verwechselt der Anwender die Stellfläche **12** nicht mit einer anderen Fläche an dem Maschinengehäuse **9**, dem Handgriff **10** oder der Batterie **13** etc. Die Stellfläche **12** eignet sich daher besonders als eine Referenzfläche **12**.

An oder in dem Elektroschrauber **1** ist eine Ausrichthilfe **14** angeordnet, welche den Anwender in einer vorgegebenen Orientierung der Handwerkzeugmaschine **1** gegenüber einer Wand **15** oder anderen zu bearbeitenden Oberfläche unterstützt. Zumeist ist die vorgegebene Orientierung die orthogonale Orientierung der Arbeitsachse **4** und damit des Werkzeugs **3** gegenüber der Wand **15.** Die Anwendung und Funktionsweise der Ausrichthilfe **14** wird daher exemplarisch an diesem herausragenden Beispiel beschrieben.

Die Ausrichthilfe **14** hat einen Taster **16** mit welchem die Ausrichthilfe **14** initialisiert wird. Die beispielhafte Ausrichthilfe **14** hat eine Anzeige **17** mit geeigneten Symbolen, welche verschiedene Schwenkrichtungen anzeigen.

Die Anwendung der Ausrichthilfe **14** erfordert von dem Anwender folgendes Vorgehen. Zunächst muss die Ausrichthilfe **14** initialisiert werden, indem die Stellfläche **12** an die zu bearbeitende Wand **15**, den Boden, die Decke oder andere Oberfläche gehalten wird. Vorzugsweise richtet der Anwender zusätzlich den Werkzeughalter **2** in eine vorgegebene Richtung aus. Bei einer vertikalen Fläche wie einer Wand **15** eignet sich eine Ausrichtung der Arbeitsachse **4** parallel zu der vertikalen Achse, d.h. der Schwerkraft. Bei einer horizontalen Fläche wie dem Boden oder der Decke richtet der Anwender den Werkzeughalter **2** von ihm wegweisend aus. Der Anwender drückt den Taster **16**, um die Ausrichthilfe **14** zu initialisieren. Die Anzeige **17** der Ausrichthilfe **14** zeigt dem Anwender nun an, in welche Drehrichtung der Elektroschrauber **1** geschwenkt werden soll, um die vorgegeben orthogonale Orientierung der Arbeitsachse **4** gegenüber der Wand **15**, etc., zu erhalten.

Die Anzeige **17** ist beispielsweise an der dem Anwender zugewandten Rückseite **18** angeordnet und hat vier Pfeile. Ein nach oben gerichteter Pfeil leuchtet auf, wenn der aktuelle Schwenkwinkel zu gering; ein nach unten gerichteter Pfeil leuchtet auf, wenn der aktuelle Schwenkwinkel **19** zu groß; ein nach links gerichteter Pfeil leuchtet auf, wenn der Elektroschrauber **1** nach rechts gegenüber der Schwenkachse **20** verkippt wurde; und ein nach rechts gerichteter Pfeil leuchtet auf, wenn der Elektroschrauber **1** nach links gegenüber der Schwenkachse **20** verkippt wurde.

Die Ausrichthilfe **14** hat einen Speicher **21**, in welchem eine relative Orientierung (Referenz-Orientierung) der Stellfläche **12** gegenüber der vorgegebenen Orientierung (Soll-Orientierung) der Arbeitsachse **4**, z.B. orthogonalen Orientierung, zu der Wand **15** hinterlegt ist.

Die Stellfläche **12** hat gegenüber der Arbeitsachse **4** eine durch die Konstruktion des Elektroschraubers **1** vorgegebene unveränderliche Referenz-Orientierung. Die Referenz-Orientierung der Referenzfläche **12** gegenüber der Arbeitsachse **4** kann durch eine Schwenkachse **20** und einen Schwenkwinkel **19** beschrieben werden. Die Schwenkachse **20** ergibt sich als Schnittlinie aus einer zu der Arbeitsachse **4** orthogonalen Ebene **22** und der Stellfläche **12**. Der Schwenkwinkel **19** ist entsprechend der zwischen der orthogonalen Ebene **22** und der Stellfläche **12** eingeschlossene Winkel. Bei dem in Fig. 1 illustrierten Elektroschrauber **1** ist die Schwenkachse **20** senkrecht zu der Bildebene. Für die nachfolgenden Betrachtungen sind nur die Orientierungen der Elektroschraubers **1** von Belang, d.h. die Raumwinkel, weshalb jede zu der zuvor konstruierten Schwenkachse **20** parallele Achse gleichwertig ist.

Die Soll-Orientierung der Arbeitsachse **4** kann unveränderlich als orthogonal vorgeben sein. Alternativ kann über ein Eingabemittel **23** eine andere Soll-Orientierung vorgegeben werden. Der Schwenkwinkel **19** und ggf. die Schwenkachse **20** sind entsprechend dem Unterschied der Soll-Orientierung zu der orthogonalen Orientierung anzupassen. Die Anpassung erfolgt basierend auf einfachen geometrischen Überlegungen, welche nicht weiter ausgeführt werden.

Die Ausrichthilfe **14** wird ansprechend auf das Betätigen des Tasters **16** initialisiert. Bei der Initialisierung übernimmt eine Auswerteinheit **24** die in dem Speicher **21** hinterlegte Referenz-Orientierung. Die aktuelle Orientierung der Ausrichthilfe **14** wird somit mit der Referenz-Orientierung gleichgesetzt. Der Elektroschrauber **1** ist aktuell um den Schwenkwinkel gegenüber der Soll-Orientierung verkippt gehalten.

Die Ausrichthilfe **14** hat einen Drehbewegungssensor **25**, welcher Drehbewegungen der Ausrichthilfe **14** erfasst. Die Auswerteinheit **24** ermittelt aus den erfassten Drehbewegungen eine sich gegenüber der Referenz-Orientierung verändernde aktuelle Orientierung der Ausrichthilfe **14**. Die Auswerteinheit **24** ermittelt eine Abweichung der aktuellen Orientierung von der Soll-Orientierung und steuert gemäß der Abweichung die Anzeige **17** an. Folgt der Anwender den Anweisungen, d.h. schwenkt den Elektroschrauber **1** um die Schwenkachse **20** um den Schwenkwinkel **19**, verringert sich die Abweichung. Die Abweichung ist gleich Null, wenn die Soll-Orientierung erreicht ist.

Der Drehbewegungssensor **25** ist vorzugsweise ein Gyrosensor, welcher die durch eine Drehbewirkung einwirkende Corioliskraft auf ein schwingendes Pendel erfasst. Das Pendel kann aus einem Kristall geschnitten oder ein Mikroelektromechanisches System (MEMS) auf Halbleiterbasis sein. Der Gyrosensor erfasst nur die relevanten Drehbewegungen und ist insensitiv gegenüber Translationsbewegungen, wodurch eine Bestimmung des aktuellen Schwenkwinkels vereinfacht und weniger fehleranfällig ist. Insbesondere erkennt ein Gyrosensor ein paralleles Versetzen des Elektroschrauber **1** entlang der Wand **15** als eine unveränderte Orientierung des Elektroschraubers **1**.

Ein alternativer Drehbewegungssensor **25** basiert auf zwei Beschleunigungssensoren, die räumlich separiert angeordnet sind. Eine Differenz der von den beiden Beschleunigungssensoren erfassten Beschleunigungen ist ein Maß für eine Winkelbeschleunigung um eine zu der Verbindungslinie der beiden Beschleunigungssensoren senkrechte Achse.

Der Drehbewegungssensor **25** erfasst zumindest die Drehbewegung um die Schwenkachse **20**. Die Ausrichthilfe **14** unterstützt den Anwender in der für ihn erfahrungsgemäß am schwersten einzuschätzenden Orientierung längs des Handgriffs **10**. Eine Fehlstellung des Elektroschraubers **1** senkrecht zu dem Handgriff **10**, d.h. nach rechts bzw. nach links, kann der Anwender meistens ohne Hilfe einschätzen. Der Drehbewegungssensor **25** kann dennoch zudem eine Drehbewegung um eine zweite Schwenkachse **26** erfassen, welche in der orthogonalen Ebene **22** liegt und orthogonal zu der (ersten) Schwenkachse **20** ist. Die Drehbewegungen um die zweite Schwenkachse **26** geben Aufschluss über ein Verkippen gegenüber der ersten Schwenkachse **20** nach links oder rechts an.

Die Auswerteinheit **24** basiert im Wesentlichen auf einer Integration der von dem Drehbewegungssensor **25** ermittelten Winkelgeschwindigkeiten bzw. Winkelbeschleunigungen um die erste Schwenkachse **20** und die zweite Schwenkachse **26**. Die Integration ergibt den aktuellen Schwenkwinkel um die erste Schwenkachse **20** bzw. den aktuellen Schwenkwinkel um die zweite Schwenkachse **26**. Ein Komparator vergleicht den ersten aktuellen Schwenkwinkel und den zweiten aktuellen Schwenkwinkel mit den jeweils vorgegebenen Schwenkwinkeln **19**.

Die Ausrichthilfe **14** kann innerhalb des Maschinengehäuse **9** oder des Handgriffs **10** des Elektroschraubers **1** angeordnet sein.

Die Ausrichthilfe **14** kann ein zu dem Elektroschrauber **1** separates Modul, z.B. in einem Seitenhandgriff, mit einem eigenständigen Gehäuse **27** sein. Beispielsweise ist die Ausrichthilfe **14** zwischen dem Elektroschrauber **1** und der Batterie **13** anordbar. Die Ausrichthilfe **14** hat eine dem Elektroschrauber **1** gleiche elektromechanische Schnittstelle und eine der Batterie **13** gleiche elektromechanische Schnittstelle. Die beiden Schnittstellen sind innerhalb der Ausrichthilfe **14** elektrisch verbunden, so dass der Elektroschrauber **1** weiterhin durch die Batterie **13** mit Strom versorgt wird. Der Drehbewegungssensor **25**, die Auswerteinheit **24** und die Anzeige **17** sowie weitere Komponenten der Ausrichthilfe **14** werden durch die gleiche Batterie **13** wie der Elektroschrauber **1** mit Strom versorgt.

Die Anzeige **17** kann durch einen Projektor **28** ergänzt oder ersetzt sein. Der Projektor **28** ist an einer von dem Anwender abgewandten Seite angeordnet. Der Projektor kann die Pfeile oder andere Zeichen auf die Wand **15** projizieren, welche dem Anwender angeben, dass und in welche Richtung der Elektroschrauber **1** zu schwenken ist.

Die Ausrichthilfe **14** kann eine drahtlose Kommunikationsschnittelle **29** aufweisen. Die Kommunikationsschnittstelle **29** kann insbesondere mit Mobilgeräten, wie mobilen Telefonen, Tablets, etc. kommunizieren. Ein bevorzugtes Kommunikationsprotokoll ist Bluetooth. Die Ausrichthilfe **14** kann beispielsweise über das mobile Telefon gesteuert werden. Ein auf dem mobilen Telefon ausgeführtes Programm löst beispielsweise die Initialisierung der Ausrichthilfe **14** und wirkt wie der obig beschriebene Taster **16**. Ferner können andere als senkrechte Orientierungen zu der Wand **15** vorgegeben werden. Die vorgegebenen Schwenkwinkel **19** werden von dem Telefon in den Speicher **21** übertragen. Das Mobilgerät kann auch als Anzeige **17** dienen, welche die Abweichung angibt. Die Kommunikationsschnittstelle **29** ist entsprechend mit dem Speicher **21** und der Auswerteinheit **24** verbunden.

Das beschriebene Beispiel nutzt die Stellfläche **12** des Elektroschraubers **1**, weil diese eindeutig für den Anwender ist und eine ausreichend eindeutige Orientierung vorgibt. Die Ausrichthilfe **14** kann jedoch auch eine andere Referenzfläche anstelle der Stellfläche **12** nutzen. Beispielsweise kann der Elektroschrauber **1** seitlich an die Wand **15** angelegt werden. Die Seite ist hierfür zweckmäßigerweise so beschaffen, dass sie nur in einer Weise stabil an der Wand **15** anliegt. Beispielsweise weist die Seite eine größere ebene Fläche auf oder drei oder mehr vorstehende Punkte, auf welchen die Seite gleich wie auf einem Dreibein kippfrei liegen kann.

Die Ausrichthilfe **14** kann ohne Beschränkung auch für andere handgehaltene Werkzeugmaschinen, insbesondere für bohrende Werkzeugmaschinen wie Bohrmaschinen, Bohrhämmer, Elektromeißel, Hohlbohrgeräte, etc. verwendet werden.

## Patentansprüche

1. Ausrichthilfe (14) für eine Handwerkzeugmaschine (1) mit
einem Speicher (21), in welchem eine Soll-Orientierung der Handwerkzeugmaschine (1) gegenüber einer zu bearbeitenden Oberfläche (15) und eine Referenz-Orientierung einer Referenzfläche (12) der Handwerkzeugmaschine (1) gegenüber der Soll-Orientierung hinterlegt sind,
einem Eingabemittel (16, 29) zum Initialisieren der Ausrichthilfe (14), welches ansprechend auf ein Betätigen eine aktuelle Orientierung mit der Referenz-Orientierung gleichsetzt,
einem Drehbewegungssensor (25), der eine Drehbewegung der Ausrichthilfe (14) erfasst,
einer Auswerteinheit (24), die eine aktuelle Orientierung gegenüber der zu bearbeitenden Oberfläche (15) basierend auf den erfassten Drehbewegungen ermittelt und die eine Abweichung der aktuellen Orientierung von der Soll-Orientierung ermittelt, eine Anzeige (17), welche dem Anwender eine Abweichung der aktuellen Orientierung von der Soll-Orientierung anzeigt.

2. Ausrichthilfe (14) nach Anspruch 1, **dadurch gekennzeichnet, dass** der Drehbewegungssensor (25) ein Gyrosensor ist.

3. Ausrichthilfe (14) nach Anspruch 1 oder 2, **dadurch gekennzeichnet, dass** die Soll-Orientierung senkrecht zu der zu bearbeitenden Oberfläche (15) ist.

4. Handwerkzeugmaschine nach Anspruch 1 bis 3, **dadurch gekennzeichnet, dass** die Anzeige (17) einen Projektor (28) zum Projizieren der Abweichung an die zu bearbeitende Oberfläche (15) enthält.

5. Handwerkzeugmaschine nach Anspruch 1 bis 4, **dadurch gekennzeichnet, dass** die Ausrichthilfe (14) eine Kommunikationsschnittstelle (29) zum Kommunizieren mit einem Mobilgerät aufweist.

6. Handwerkzeugmaschine nach Anspruch 5, **dadurch gekennzeichnet, dass** die in dem Speicher (21) hinterlegte Soll-Orientierung über die Kommunikationsschnittstelle (29) einstellbar ist.

7. Handwerkzeugmaschine nach Anspruch 5 oder 6, **dadurch gekennzeichnet, dass** die Kommunikationsschnittstelle (29) die Abweichung ausgibt.

8. Steuerungsverfahren für eine Ausrichthilfe (14) einer Handwerkzeugmaschine (1), welche einen Speicher (21) aufweist, in welchem eine Soll-Orientierung der Handwerkzeugmaschine (1) gegenüber einer zu bearbeitenden Oberfläche (15) und eine Referenz-Orientierung einer Referenzfläche (12) der Handwerkzeugmaschine (1) gegenüber der Soll-Orientierung hinterlegt ist, und welche einen Drehbewegungssensor (25) aufweist, der eine Drehbewegung der Ausrichthilfe (14) erfasst,
mit den Schritten:
Initialisieren der Ausrichthilfe (14) ansprechend auf ein Betätigen eines Eingabemittels (16, 29) wobei eine aktuelle Orientierung mit der Referenz-Orientierung gleichsetzt wird, Erfassen von Drehbewegungen der Ausrichthilfe (14) mittels des Drehbewegungssensors (25),
Ermitteln einer Auswerteinheit (24) einer aktuellen Orientierung gegenüber der zu bearbeitenden Oberfläche (15) basierend auf den erfassten Drehbewegungen und ermitteln einer Abweichung der aktuellen Orientierung von der Soll-Orientierung ermittelt,
Anzeigen einer Abweichung der aktuellen Orientierung von der Soll-Orientierung mittels einer Anzeige (17).
